# EUROPEAN PATENT APPLICATION

(11) **EP 4 181 106 A1**
(43) Date of publication of application: **17.05.2023**
(21) Application number: 22828521.9
(22) Date of filing: 23.06.2022
(51) Int. Cl.: G09C 1/00, G06F 21/62

(54) **DATA MANAGEMENT SYSTEM**

(30) Priority: 25.06.2021 JP 2021105679
(71) Applicant: A.T COMMUNICATIONS CO., LTD., Tokyo 110-0014 (JP)
(72) Inventor: TOYOIZUMI, Hiroshi, Tokyo 110-0014 (JP); AZUMA, Youichi, Tokyo 110-0014 (JP); MORIMOTO, Hajime, Tokyo 104-0033 (JP); MORIMOTO, Atsushi, Tokyo 104-0033 (JP)
(74) Representative: Ruschke, Hans Edvard
(86) International application number: PCT/JP2022/025203
(87) International publication number: WO 2022/270605

(57) **Abstract**

[Problem]

To provide a highly confidential data management system.

[Solution]

Provided is a data management system comprising: a data division unit 17 that obtains first data 13 and second data 15 obtained by dividing source data 11; a first data storage unit 19 that stores the first data 13; a code conversion unit 21 that obtains coded second data by converting the second data 15 into code information; a coded second data output unit 23 that outputs the coded second data as outputted coded second data; a code information reading unit 25 that reads the coded second data on the basis of the outputted coded second data; and a data restoration unit 27 that, on the basis of the coded second data read by the code information reading unit 25, reads the first data from the first data storage unit, and restores the source data.

## Description

### TECHNICAL FIELD

This invention relates to a data management system and the like.

### BACKGROUND ART

Japanese Patent No. 6664785 discloses a data recovery device. The invention disclosed in this publication separates data into two. One of the data is saved via a network, and after the remaining data is saved locally, the data is recovered. This data recovery device can reduce locally saved data.

Patent Document 1: Japanese Patent No. 6664785

### DISCLOSURE OF THE INVENTION

### PROBLEMS TO BE SOLVED BY THE INVENTION

Compared with the data recovery device disclosed in Japanese Patent No. 6664785, a data recovery device having even higher secrecy, a data management system that can appropriately conceal and recover personal information, and a data management system that can reproduce data while maintaining secrecy even when information for recovering the data is lost have been desired.

One object of this invention is to solve any one or more of the above-mentioned problems.

### SOLUTIONS TO THE PROBLEMS

The first invention relates to a data management system.

This data management system 1 includes a data dividing unit 17, a first data storage unit 19, a code converting unit 21, a coded second data output unit 23, a code information read out unit 25, and a data recovering unit 27.

The data dividing unit 17 is an element for obtaining first data 13 and second data 15 that can be obtained by dividing base data 11. An example of the base data is binary data obtained by randomizing primary data. An example of the first data is chaos data described later, and an example of the second data is piece data described later.

The first data storage unit 19 is an element for storing the first data (example: chaos data) 13. The first data storage unit may exist on an online server, or may exist off-line.

The code converting unit 21 is an element for converting the second data (example: piece data) 15 into code information and obtaining coded second data. Examples of the coded second data are two-dimensional code information and AQR code (registered trademark) information.

The coded second data output unit 23 is an element for outputting the coded second data (example: AQR code information (registered trademark)) as outputted coded second data. An example of the outputted coded second data is a colored QR code (registered trademark) printed on a medium. Another example of the outputted coded second data includes code information printed on a medium to be recognized by ultraviolet ray or infrared ray. In this case, the code information read out unit reads out the coded second data using the code information to be recognized by ultraviolet ray or infrared ray.

The code information read out unit 25 is an element for reading out the coded second data based on the outputted coded second data.

The data recovering unit 27 is an element for reading out the first data from the first data storage unit and recovering the base data, based on the coded second data read out by the code information read out unit 25.

This data management system:
divides the base data 11, and obtains the first data and the second data;
stores the first data;
converts the second data into code information to obtain the coded second data;
outputs the coded second data as the outputted coded second data;
reads out the coded second data based on the outputted coded second data; and
reads out the first data and recovers the base data based on the read out coded second data. This data management system is implemented by a computer, a computer processor, or a program recorded in a computer.

A preferred example of the data management system further includes a coded second data storage unit 29 and a code output unit 31.

The coded second data storage unit 29 is an element for storing the coded second data and data identification information related to the coded second data in association with one another.

The code output unit 31 is an element for reading out the coded second data from the coded second data storage unit when the data identification information is input, and obtaining the outputted coded second data.

The second invention relates to a computer program. This program is a data management program for causing a computer (or a computer processor) to perform:
a step of dividing base data to obtain first data and second data;
a step of storing the first data;
a step of converting into code information based on the second data to obtain the coded second data;
a step of outputting outputted coded second data using the coded second data;
a step of reading out the coded second data using the outputted coded second data;
a step of reading out the first data using the coded second data; and
a step of recovering the base data using the steps of reading out the coded second data and the first data.

Note that, this description also provides an information recording medium that can be read by a computer storing the above-described program.

### ADVANTAGEOUS EFFECTS OF THE INVENTION

Thus, this data management system divides the base data, codes and outputs one of the data, recovers the data thereof using the coded data, and further recovers the base data, thereby having high secrecy. In addition, the coded data is stored in association with the data identification information (such as fingerprint, iris, pupil, or personal information), thus ensuring its reproduction while maintaining secrecy even when the outputted code information is lost.

### BRIEF DESCRIPTION OF THE DRAWINGS

Fig. 1 is a block diagram illustrating a data management system.
Fig. 2 is a conceptual diagram illustrating an example of a system of the present invention.
Fig. 3 is a conceptual diagram illustrating an example of managing data using the system of the present invention.
Fig. 4 is a flowchart depicting an example of managing data.

### DESCRIPTION OF PREFERRED EMBODIMENTS

The following describes embodiments for performing the present invention using the drawings. The present invention is not limited to the embodiments described below, but includes modifications from the following embodiments appropriately made by those skilled in the art within the obvious scope.

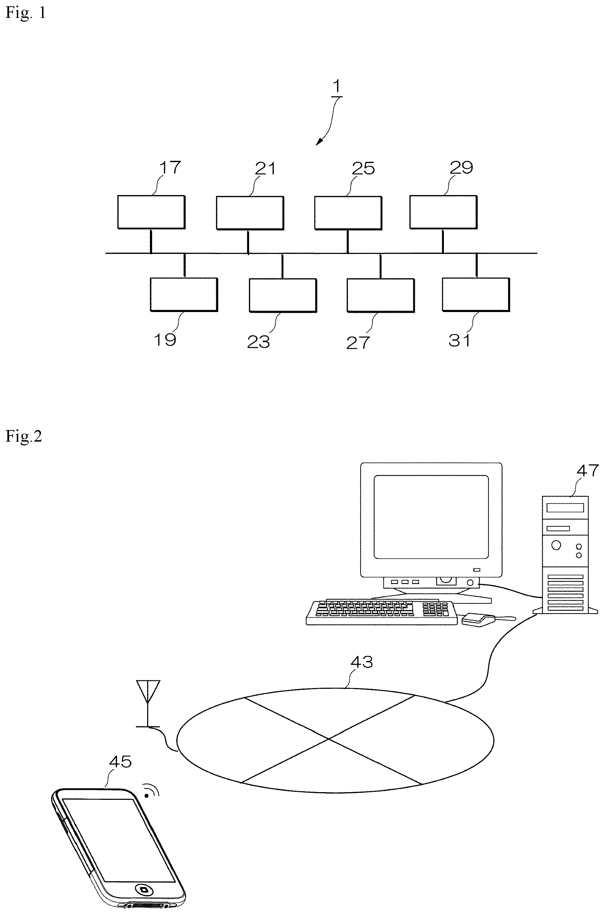

Fig. 1 is a block diagram for illustrating a data management system. This system includes a computer, and each element described below is an element implemented by the computer. The computer may be any of various terminals, a mobile terminal, a notebook computer, a personal computer, a server, and a computer server system. This system may be implemented by a processor or may be implemented by cooperation of various hardware and software, such as a program.

As shown in Fig. 1, this data management system 1 includes a data dividing unit 17, a first data storage unit 19, a code converting unit 21, a coded second data output unit 23, a code information read out unit 25, and a data recovering unit 27. In addition, a preferred example of this data management system 1 further includes a coded second data storage unit 29 and a code output unit 31.

The computer has an input unit, an output unit, a control unit, a calculation unit, and a storage unit, and each element is connected by, for example, a bus so as to be able to transmit and receive information. For example, in the storage unit, a program may be stored, or various information may be stored. The computer may include a processor and perform various computations and various processes based on commands of a program. When predetermined information is input from the input unit, the control unit reads out a control program stored in the storage unit. Then, the control unit reads out the information stored appropriately in the storage unit and transmits it to the calculation unit. Further, the control unit transmits the information input appropriately to the calculation unit. The calculation unit conducts a computation process using the received various information, and stores the resultant in the storage unit. The control unit reads out the result of the computation stored in the storage unit and outputs it from the output unit. Various processes are thus conducted. Each element described below may correspond to any of the elements of the computer. Examples of the output unit include a monitor and a screen.

Fig. 2 is a conceptual diagram illustrating an example of the system of the present invention. As illustrated in Fig. 2, the system of the present invention (the system including a device of the present invention) may be a system including a mobile terminal 45 connected to the Internet or an intranet 43 and a server 47 connected to the Internet or intranet 43. Surely, a single computer or mobile terminal may function as the device of the present invention, or a plurality of servers may exist.

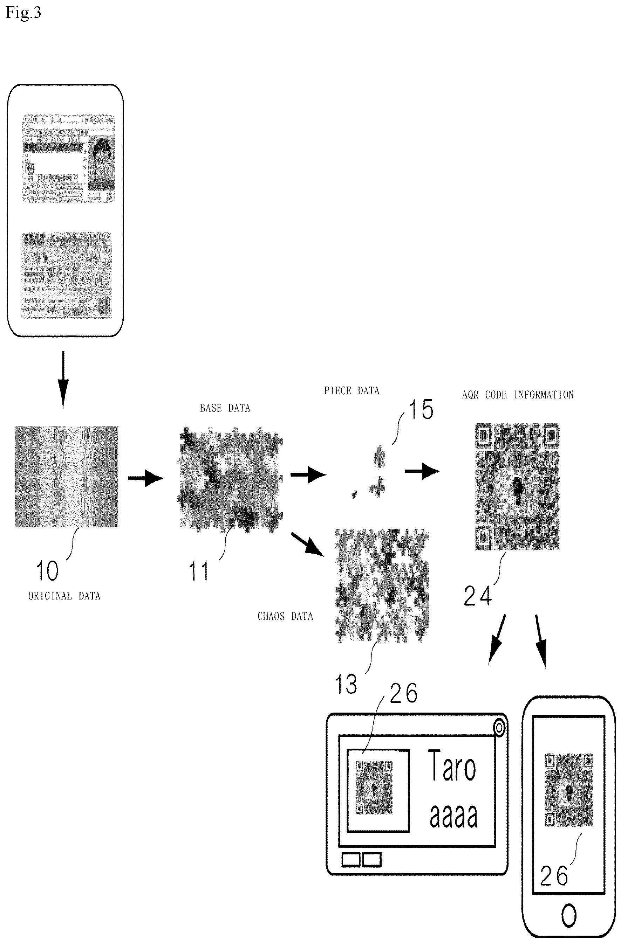

Fig. 3 is a conceptual diagram illustrating an example of managing data using the system of the present invention. In this example, data that is desired to be managed is prepared. Examples of the data that is desired to be managed include, a driver's license, driver's license data, seal registration certificate data, seal impression data, health insurance card data, resident certificate data, data of certified copy of family register, data related to genes of individuals, and ordinary data. Of these, since this system, as described later, includes recovering data using identification information regarding individuals as one aspect, data related to individuals can be managed especially preferably. The base data 11 may be digital data thereof, and may also be the digital data that is appropriately encrypted. Further, the base data may be the digital data or the encrypted data that is further randomized (binary data).

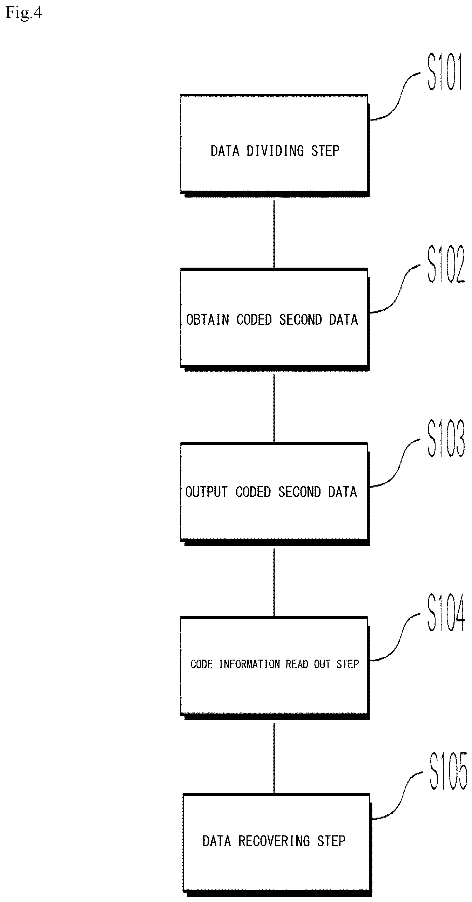

Fig. 4 is a flowchart depicting an example of managing data.

### Data Dividing Step (S101)

The data dividing unit 17 obtains the first data 13 and the second data 15 that are obtained by dividing the base data 11. The control unit and the calculation unit of the computer function as the data dividing unit 17. The base data 11 is stored in the storage unit. Subsequently, the system receives commands of the program, reads out the base data 11 from the storage unit, and causes the calculation unit to perform a process of dividing the base data 11. Thus, the system obtains the first data 13 and the second data 15. The first data is also referred to as chaos data, and the second data is also referred to as piece data. The base data 11 is preferred to be divided such that the base data 11 or the data that is the base of the base data 11 cannot be recovered by the chaos data only or the piece data only. Therefore, the base data 11 is preferred to be the original data that is encrypted or randomized.

Regarding the data amounts of the first data (chaos data) and the second data (piece data), the former is preferred to be larger, since the piece data is output as code information. The data amount ratio is assumed to be the data amount of the first data (chaos data) / the data amount of the second data (piece data). In this case, the data amount ratio is preferred to be 3 or more and 10⁴ or less, may be 3 or more and 10³ or less, may be 3 or more and 10² or less, may be 4 or more and 10² or less, or may be 10 or more and 10⁴ or less.

The first data storage unit 19 stores the first data (example: chaos data) 13. The storage unit of the computer functions as the first data storage unit 19. The first data storage unit may exist on an online server, or may exist off-line. Thus, the first data (chaos data) may be stored in a storage unit of a local server. In addition, the first data may be stored in various servers via the Internet. Moreover, in a case where the base data 11 or original data 10 cannot be recovered only by the first data, the first data may be opened to the public. Here, the first data may be stored in association with an identifier related to the second data. Further, the first data may be stored in a local server and an emergency server that functions in substitution for the local server when the local server breaks down. In addition, the first data may be stored in a local server and a stand-alone storage unit (such as a stand-alone computer or a stand-alone hard disk, which is normally not stored in the network). Thus, the first data can be used even in case of emergency.

The second data (piece data) may be stored in the storage unit of the local server, or may be stored in various servers via the Internet. Most of all, the second data is preferred to be stored in the storage unit of the computer or the storage unit of the local server, and be placed in an environment that cannot be accessed by a third person. The storage unit of the computer functions as the second data storage unit.

Most of all, the second data is preferred to exist only in a cache and be performed a coding process without being stored, for example, in a hard disk. In addition, after the second data has been coded, the second data may be deleted from the storage unit. Accordingly, since the second data does not exist, the concealment of the data can be improved.

### Coded Second Data Obtaining Step (S 102)

The code converting unit 21 converts the second data (piece data) 15 into code information to obtain coded second data 24. The coded second data is information for outputting the code information. For example, the control unit and the calculation unit of the computer function as the code converting unit 21. The control unit causes the calculation unit to perform an appropriate computation with respect to the second data based on commands of the program, thereby allowing the computer to obtain the coded second data 24. The coded second data thus obtained is appropriately stored in the storage unit. Methods and devices to code the data are publicly known. For example, Japanese Patent No. 6664785 (Patent Document 1) discloses a data code generation server. In addition, Japanese Patent No. 5945376 discloses a two-dimensional code generation device. By using such devices, data can be coded. An example of the coded second data is AQR code information (registered trademark) for printing a two-dimensional code or a colored QR code (registered trademark). The coded second data may be stored in the coded second data storage unit 29 described later. The colored two-dimensional code and the colored QR code (registered trademark) mean two-dimensional codes that are not only monochrome but also has color. This portion with color may be, for example, a photograph of an individual or an avatar of an individual. In addition, the portion with color may be a specific character. By an outputted coded second data 26 having such portion with color, a sense of attachment grows for the outputted coded second data 24.

### Coded Second Data Output Step (S103)

The coded second data output unit 23 outputs the coded second data as the outputted coded second data 24. For example, the control unit, the calculation unit, and the output unit (a printer, an interface, and a communication unit) of the computer function as the coded second data output unit 23. The output unit is preferred to include a color printer. The outputted coded second data 24 may be identification information that can read out the coded second data stored in the coded second data storage unit 29. In this case, when the outputted coded second data 24 is input, the computer can read out the coded second data from the storage unit using the outputted coded second data 24.

An example of the outputted coded second data 26 is a colored two-dimensional code (AQR code (registered trademark)) printed on a medium. Another example of the outputted coded second data is code information printed on a medium to be recognized by ultraviolet ray or infrared ray. In this case, the code information read out unit is one that reads out the coded second data based on the code information to be recognized by ultraviolet ray or infrared ray. Preferred examples of the outputted coded second data are visually recognizable code information (a two-dimensional code, a QR code (registered trademark), and a colored QR code (registered trademark)), and also one that includes code information to be recognized by ultraviolet ray or infrared ray. In this case, for example, even if a stranger duplicates the medium and copies the visually recognizable code information part, the code information to be recognized by ultraviolet ray or infrared ray cannot be recovered, and therefore, the outputted coded second data cannot be completely duplicated, and unauthorized use can be avoided. Another example of the outputted coded second data is a QR code (registered trademark) transmitted to a terminal for an individual (example: mobile terminal). In this case, it is only necessary to register a terminal related to the above-described individual, identification information (mail address) related to the individual, and the like and transmit the outputted coded second data by using the registered identification information.

The computer is preferred to store the coded second data and the second data in the storage unit such that they can be recovered based on the outputted coded second data.

### Code Information Read Out Step (S104)

The code information read out unit 25 is an element for reading out the coded second data based on the outputted coded second data. For example, the input unit, the control unit, and the calculation unit of the computer function as the code information read out unit 25. For example, Japanese Patent No. 6664785 (Patent Document 1) and Japanese Patent No. 5945376 disclose devices that read out two-dimensional codes. For example, an imaging unit connected to the computer functions as the code information read out unit 25. For example, the outputted coded second data (a colored QR code (registered trademark) printed on a medium or a colored QR code (registered trademark) displayed on the mobile terminal) is held over the imaging unit. Accordingly, the imaging unit captures the outputted coded second data and inputs the captured image into the system. The control unit causes the calculation unit to analyze the image based on commands of the program and reads out the coded second data from the storage unit based on the outputted coded second data.

### Data Recovering Step (S 105)

The data recovering unit 27 reads out the first data from the first data storage unit and recovers the base data, based on the coded second data read out by the code information read out unit 25. For example, the control unit, the calculation unit, and the storage unit of the computer function as the data recovering unit 27. In this step, the second data is read out from the storage unit using the coded second data. Meanwhile, the first data is, for example, stored in the storage unit in relation to the second data. The first data is read out using the read out second data. Later, the base data is recovered using the first data and the second data. In a case where the base data is one that is encrypted or preliminarily subject to randomizing process, the control unit causes the calculation unit to perform an appropriate computation process based on commands of a decoding program, and thereby recovers the original data 10 using the base data 11. Thus, the data is recovered.

Next, data management in a case where an individual has lost the outputted coded second data (such as a medium on which a colored QR code (registered trademark) is printed) will be described.

In this example, the coded second data storage unit 29 stores the coded second data and data identification information related to the coded second data in association with one another. The storage unit of the computer functions as the coded second data storage unit 29. The data identification information and the coded second data are associated and stored in the coded second data storage unit 29. Therefore, when the data identification information is input to the system, the computer is able to read out the coded second data from the storage unit. The data identification information is only necessary to be one that is appropriate according to the original data 10 and the base data 11. For example, in a case where the original data 10 and the base data 11 are personal information, an example of the data identification information is information for identifying the individual. Examples of information for identifying an individual are fingerprint information, iris information, retina information, pupil information, face data information for face authentication, date of birth, name, address, telephone number, and a secret question and its answer.

When the data identification information is input, the code output unit 31 reads out the coded second data from the coded second data storage unit, and obtains the outputted coded second data. For example, the control unit, the calculation unit, and the output unit of the computer function as the code output unit 31. For example, the data identification information is input to the computer. Accordingly, the computer reads out the coded second data from the coded second data storage unit 29 using the data identification information. Subsequently, the control unit of the computer prints the code in an output unit of a printer and the like and obtains the outputted coded second data according to commands of the program. Thus, for example, even in a case where a user has lost the outputted coded second data, the outputted coded second data can be reproduced using the personal information. By using the reproduced outputted coded second data, as described above, the original data 10 and the base data 11 can be reproduced.

This invention includes a program for causing a computer to function as any of the systems described above, and an information recording medium (such as a DVD, a CD-ROM, a USB flash drive, a hard disk, or a SIM card) that can be read by the computer that stores such program.

### INDUSTRIAL APPLICABILITY

This invention can be used in the information-and-communication-related industry.

### DESCRIPTION OF REFERENCE SIGNS

- 1: data management system
- 11: base data
- 13: first data
- 15: second data
- 17: data dividing unit
- 19: first data storage unit
- 21: code converting unit
- 23: coded second data output unit
- 25: code information read out unit
- 27: data recovering unit
- 29: coded second data storage unit
- 31: code output unit

## Claims

1. A data management system comprising:
a data dividing unit (17) that obtains first data (13) and second data (15) that are obtained by dividing base data (11);
a first data storage unit (19) that stores the first data (13);
a code converting unit (21) that converts the second data (15) into code information to obtain coded second data;
a coded second data output unit (23) that outputs the coded second data as outputted coded second data;
a code information read out unit (25) that reads out the coded second data based on the outputted coded second data; and
a data recovering unit (27) that reads out the first data from the first data storage unit and recovers the base data, based on the coded second data read out by the code information read out unit (25), wherein
the data management system further includes:
a coded second data storage unit (29) that stores the coded second data and data identification information related to the coded second data in association with one another; and
a code output unit (31) for reading out the coded second data from the coded second data storage unit and obtaining the outputted coded second data when the data identification information is input.

2. The data management system according to claim 1, wherein
the outputted coded second data is a colored two-dimensional code printed on a medium.

3. The data management system according to claim 1, wherein
the outputted coded second data includes code information printed on a medium to be recognized by ultraviolet ray or infrared ray; and
the code information read out unit reads out the coded second data using the code information to be recognized by ultraviolet ray or infrared ray.

4. The data management system according to claim 1, wherein
the base data is binary data obtained by randomizing primary data.

5. The data management system according to claim 1, wherein
the first data storage unit exists on an online server.

6. The data management system according to claim 1, wherein
the first data storage unit exists off-line.

7. A data management program for a computer to perform:
a step of obtaining first data and second data by dividing base data;
a step of storing the first data;
a step of converting into code information based on the second data to obtain coded second data;
a step of outputting outputted coded second data using the coded second data;
a step of reading out the coded second data using the outputted coded second data;
a step of reading out the first data using the coded second data;
a step of recovering the base data using the steps of reading out the coded second data and the first data;
a step of storing the coded second data and data identification information related to the coded second data in association with one another, and
a step of reading out the coded second data and obtaining the outputted coded second data when the data identification information is input.
